# EUROPÄISCHE PATENTSCHRIFT

(11) **EP 1 174 330 B1**
(45) Veröffentlichungstag und Bekanntmachung des Hinweises auf die Patenterteilung: **08.02.2006**
(21) Anmeldenummer: 01106389.8
(22) Anmeldetag: 20.03.2001
(51) Int. Cl.: B62D 15/02, B62D 1/16

(54) **Sicherungselement zum formschlüssigen Verriegeln eines Rotors mit einem Stator einer Kraftfahrzeuglenkung**
Retention element for form-fittingly securing a rotor with a stator in a vehicle steering apparatus
Elément de retenue pour verrouiller par liaison de forme un rotor à un stator d'une direction de véhicule

(30) Priorität: 20.07.2000 DE 10035261
(43) Veröffentlichungstag der Anmeldung: 23.01.2002
(73) Patentinhaber: Valeo Schalter und Sensoren GmbH, 74321 Bietigheim-Bissingen (DE)
(72) Erfinder: Morgenroth, Thorsten, 74347 Bönnigheim (DE); Hecht, Walter, 74321 Bietigheim-Bissingen (DE); Klein, Rudolf, 74348 Lauffen a.N. (DE)
(74) Vertreter: Dreiss, Fuhlendorf, Steimle & Becker

(56) Entgegenhaltungen:
- EP-A- 0 672 573
- DE-C- 19 544 580
- FR-A- 2 702 016

## Beschreibung

Die Erfindung betrifft ein Sicherungselement zum formschlüssigen Verriegeln eines Rotors mit einem Stator einer Kraftfahrzeuglenkung, mit einem Führungselement, mit einer Rastnase und mit einem Federelement, wobei sich das Federelement gegen den Rotor und das Sicherungselement abstützt.

An der Lenksäule moderner Kraftfahrzeuge sind neben dem Lenkrad weitere Bauteile, wie beispielsweise ein Drehwinkelsensor mit einem Rotor und einem Stator, angeordnet. Das Lenkrad moderner Kraftfahrzeuge beinhaltet einen Airbag sowie zumindest einen oder mehrere Hupenschalter. Die mechanische Verbindung zwischen Drehwinkelsensor und Lenkrad sowie die elektrische Verbindung zwischen Lenkrad und dem elektrischen Bordnetz des Kraftfahrzeugs werden über formschlüssige Kopplungen bzw. elektrische Steckverbindungen hergestellt. Aus diesem Grund ist es notwendig, vorgefertigte Baugruppen, wie beispielsweise den Drehwinkelsensor, in einer definierten Position einzubauen. Dies wurde bislang dadurch gewährleistet, dass Stator und Rotor des Drehwinkelsensors durch ein Verriegelungselement formschlüssig miteinander verbunden wurden, welches beim Zulieferer dieser Baugruppe montiert und nach der Endmontage der Baugruppe an der Lenksäule entfernt wurde.

Um die eindeutige Zuordnung zwischen Lenkradposition und Drehwinkelsensor und der elektrischen Steckverbindungen sicherzustellen, wenn bei Reparaturen des Kfz das Lenkrad angenommen werden muss, ist auf dem Rotor zusätzlich ein federbelastetes Sicherungselement vorgesehen. Das Sicherungselement wird durch das montierte Lenkrad gegen die Federkraft entriegelt und beim Abnehmen des Lenkrads in eine Verriegelungsposition gedrückt.

Aus der FR 2 702 016 ist ein Verriegelunsgelement bekannt, dass eine Lenksäule drehfest mit einem Mantelrohr verbinden kann. Nach erfolgter Montage dieser Baugruppe im Fahrzeug, wird die Verriegelung aufgehoben, indem das Verriegelungselement an einer Sollbruchstelle in zwei Teile zerbrochen wird.

Aus der EP 0 672 573 A1 ist es bekannt die axiale Verschiebung einer Lenksäule relativ zu einem Mantelrohr mit Hilfe zweier voneinander unabhängiger Sicherungslemente zu begrenzen. Mit Hilfe des ersten Sicherungslements kann die mögliche axiale Verschiebung auf einen bestimmten Wert begrenzt werden, während mit Hilfe des zweiten Sicherungselements die axiale Verschiebung vollständig unterbunden wird.

Der Erfindung liegt die Aufgabe zugrunde, die Funktionen des Sicherungselements und des Verriegelungselements kostengünstiger zu realisieren und die mit der Verwaltung und Handhabung der Bauteile verbundenen Kosten zu reduzieren.

Diese Aufgabe wird erfindungsgemäß gelöst durch ein Sicherungselement zum formschlüssigen Blockieren der Drehbewegung eines Rotors relativ zu einem Stator einer Kraftfahrzeuglenkung, mit einem Führungselement, mit einer Rastnase und mit einem Federelement, wobei das Federelement gegen den Rotor und das Sicherungselement abstützbar ist, wobei an dem Sicherungselement ein am Stator verrastbares Verriegelungselement lösbar befestigt ist und wobei das Verriegelungselement in verrastetem Zustand formschlüssig mit dem Rotor verbunden ist, so dass während des Transports von Rotor und Stator vom Zulieferbetrieb zum Montageband des Kraftfahrzeugherstellers keine Relativbewegung des Rotors zum Stator möglich ist und somit diese Baugruppe in genau der Position das Montageband erreicht, in der sie vom Zulieferer montiert und geprüft wurde. Am Montageband kann das Verriegelungselement gelöst und vom Sicherungselement getrennt werden, so dass die Funktionalität des Sicherungselements derjenigen der Sicherungselemente nach dem Stand der Technik entspricht.

In weiterer Ergänzung der Erfindung ist vorgesehen, dass das Sicherungselement und das Verriegelungselement durch ein als Sollbruchstelle ausgebildetes Filmscharnier verbunden sind, so dass das Verriegelungselement einfach mit dem Stator verrastet werden kann, ohne das Sicherungselement zu bewegen und außerdem nach dem Lösen dieser Verrastung das Verriegelungselement einfach vom Sicherungselement getrennt werden kann.

Bei einer anderen Ausgestaltung der Erfindung weist das Verriegelungselement eine Öffnung auf und nimmt die Öffnung in verrastetem Zustand einen Vorsprung oder einen Zentrierstift des Rotors auf, so dass auf einfache und zuverlässige Weise eine formschlüssige Verbindung zwischen Verriegelungselement und Rotor in verrastetem Zustand vorhanden ist.

In weiterer Ergänzung der Erfindung weist das Verriegelungselement eine Rastnase auf, so dass die Verrastung der Rastnase durch das Einrasten der Rastnase in einer entsprechenden Ausnehmung des Stators erfolgt.

In weiterer Ergänzung der Erfindung ist vorgesehen, dass das Führungselement als Führungsstift ausgebildet ist und dass das Federelement eine auf den Führungsstift aufgeschobene Spiralfeder ist, so dass die Führung des Sicherungselements auf dem Rotor durch eine einfache Bohrung im Rotor gewährleistet ist und außerdem das Federelement einfach und ohne zusätzlichen Aufwand fixiert wird.

In weiterer Ergänzung der Erfindung besteht das Sicherungselement aus Kunststoff, so dass es einfach und kostengünstig herstellbar ist.

Weitere Vorteile und vorteilhafte Ausgestaltungen der Erfindung sind den Zeichnungen und deren nachfolgenden Beschreibung sowie den Patentansprüchen entnehmbar.

In der Zeichnung ist ein Ausführungsbeispiel des Gegenstands der Erfindung dargestellt und nachfolgend beschrieben. Es zeigen:
- Fig. 1:: eine perspektivische Ansicht von unten eines Sicherungselements;
- Fig. 2:: eine perspektivische Ansicht von oben eines Sicherungselements;
- Fig. 3:: ein an einem Rotor angeordnetes Sicherungselement und
- Fig. 4:: einen mit einem Sicherungselement verriegelten Rotor.

Im Folgenden werden für gleiche Bauteile in den verschiedenen Figuren die gleichen Bezugszeichen verwandt und nicht nochmals erläutert. Es gilt das anhand einer Figur Erläuterte für die anderen Figuren, in denen gleiche Bezugszeichen auftreten, entsprechend.

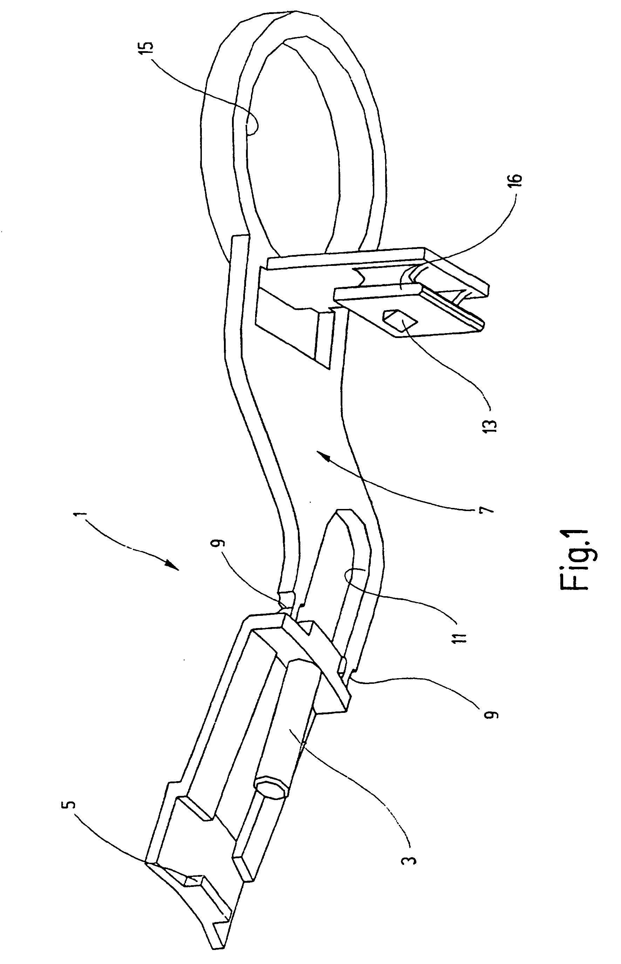

In Fig. 1 ist ein Ausführungsbeispiel eines erfindungsgemäßen Sicherungselements 1 perspektivisch von unten dargestellt. Das Sicherungselement 1 weist einen Führungsstift 3 und eine Rastnase 5 auf. Mit dem Führungsstift 3 wird das Sicherungselement 1 in einen in Fig. 1 nicht dargestellten Rotor gesteckt. Durch eine in Fig. 1 ebenfalls nicht dargestellte Spiralfeder, welche auf den Führungsstift aufgeschoben wird und die sich zwischen Sicherungselement 1 und dem Rotor abstützt, wird das Sicherungselement in eine Verriegelungsposition gedrückt. In der Verriegelungsposition greift die Rastnase 5 in eine entsprechende Ausnehmung eines ebenfalls nicht dargestellten Stators ein, so dass Stator und Rotor formschlüssig miteinander verbunden sind.

An dem Sicherungselement 1 ist ein Verriegelungselement 7 angespritzt. Das Verriegelungselement 7 weist ein als Sollbruchstelle ausgebildetes Filmscharnier 9 sowie eine Öffnung 11 und eine Rastnase 13 auf. Des Weiteren ist an dem Verriegelungselement 7 ein Ring 15 vorgesehen an dem das Verriegelungselement 7 gut zu greifen ist, so dass das Verriegeln und das anschließende Entriegeln und Entfernen des Verriegelungselements 7 vom Sicherungselement 1 erleichtert wird. Die Rastnase 13 ist auf einer Schiene 16 angeordnet, welche in eine entsprechende Nut des nicht dargestellten Stators eingeführt werden kann.

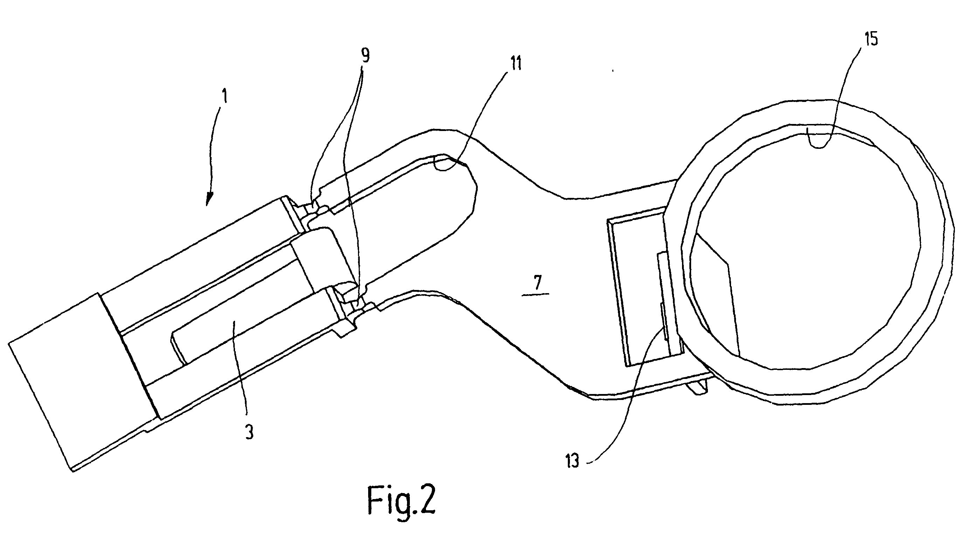

In Fig. 2 ist das erfindungsgemäße Sicherungselement 1 in einer perspektivischen Ansicht von oben dargestellt. Gleiche Bauteile sind mit gleichen Bezugszeichen versehen.

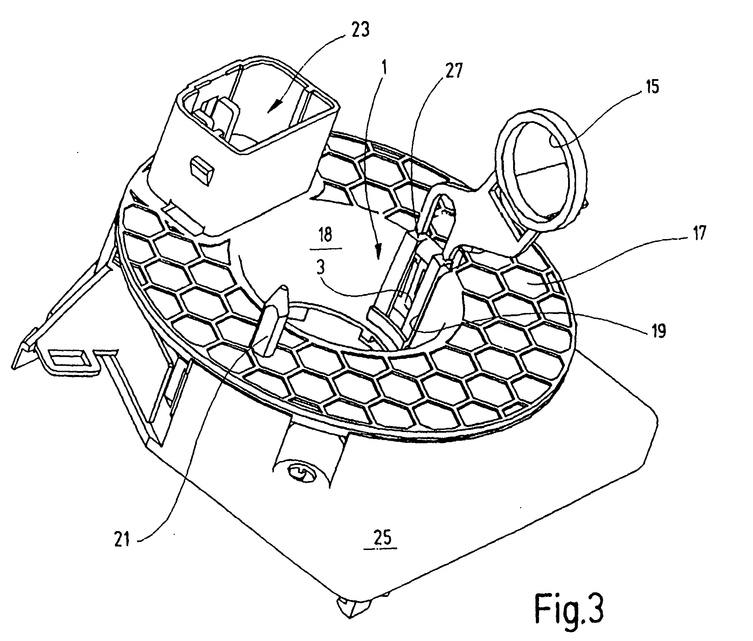

In Fig. 3 ist ein Sicherungselement 1 auf einen Rotor 17 aufgeschoben dargestellt. Eine zylindrische Innenbohrung 18 des Rotors 17 weist eine Nut 19 auf, in die das Sicherungselement 1 eingeschoben wurde. Der Rotor 17 weist an seiner Oberseite zwei Zentrierstifte 21, von denen einer durch das Verriegelungselement 7 verdeckt wird, und einen elektrischen Stecker 23 auf.

In Fig. 3 nicht dargestellt, weil vom Sicherungselement 1 verdeckt, sind Ausnehmungen in einem Stator 25, in welchen die in Fig. 3 ebenfalls verdeckte Rastnase 5 in der dargestellten Position des Sicherungselements 1 eingreift. In Fig. 3 ragt das Sicherungselement mit seiner Stirnseite 27 über den Rotor 17 hinaus. Wenn das Sicherungselement gegen die Federkraft einer auf den Führungsstift 3 aufgeschobenen, in Fig. 3 nicht erkennbaren Spiralfeder so weit nach unten gedrückt wird, dass die Stirnseite des Sicherungselements 1 eben mit dem Rotor 17 abschließt, ist die Rastnase 5 aus der Ausnehmung des Stators 25 ausgetaucht, so dass Rotor 17 und Stator 25 gegeneinander verdreht werden können. Dies bedeutet, dass immer, wenn ein Lenkrad auf den Rotor 17 aufgesetzt wird und dieses nicht dargestellte Lenkrad das Sicherungselement 1 nach unten in den Rotor drückt, die Verdrehsicherung des Rotors 17 bezüglich des Stators 25 ausgekuppelt wird und bei jeder Demontage des nicht dargestellten Lenkrads diese Verdrehsicherung wieder eingekuppelt wird.

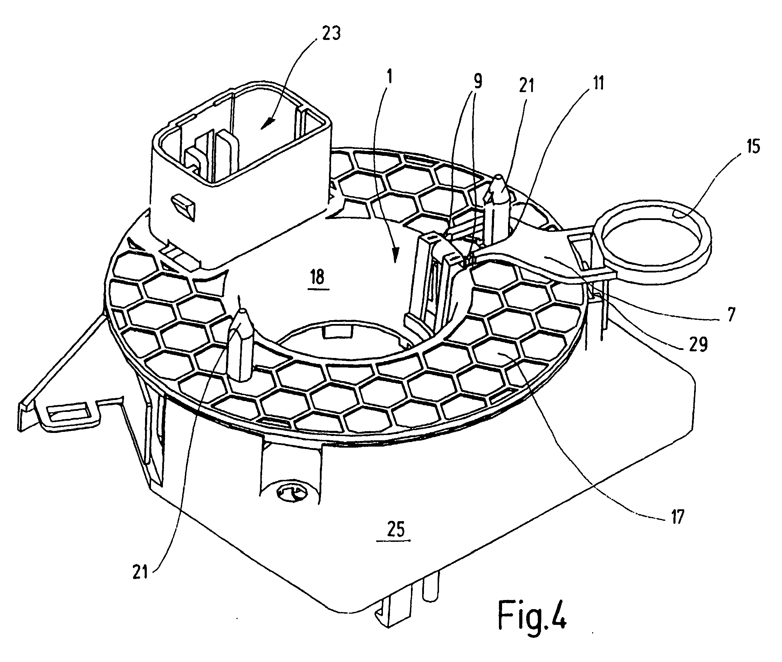

In Fig. 4 ist die zusätzliche Verriegelung von Stator 25 und Rotor 17 durch das mit dem Stator 25 verrastete Verriegelungselement 7 dargestellt. Das Verrasten des Verriegelungselements 7 erfolgt dadurch, dass das Verriegelungselement 7 am Filmscharnier 9 abgeknickt wird, so dass die Öffnung 11 den zweiten Zentrierstift 21 aufnimmt. Die in Fig. 4 nicht erkennbare Schiene 16 wird in eine Nut 29 des Stators eingeführt und sorgt dafür, dass die Rastnase 13 in eine in Fig. 4 ebenfalls verdeckte Ausnehmung des Stators 25 einrastet.

Wenn die in Fig. 4 dargestellte Baugruppe vom Zulieferer geprüft und in der dargestellten Position verriegelt wurde, wird sie zum Hersteller des Kraftfahrzeugs transportiert und dort an der Lenksäule des Kraftfahrzeugs montiert. Nach erfolgter Montage kann das Verriegelungselement 7 durch Abreißen des Filmscharniers 9 entfernt werden, so dass lediglich das Sicherungselement 1 verbleibt und somit auch dessen Funktionen weiterhin vorhanden sind. Der Ring 15 erleichtert das Verrasten des Verriegelungselements 7 im Stator 25 und das Lösen dieser Verrastung sowie das Abreißen des Verriegelungselements 7 entlang des Filmscharniers 9.

## Patentansprüche

1. Sicherungselement zum formschlüssigen Blockieren der Drehbewegung eines Rotors (17) relativ zu einem Stator (25) einer Kraftfahrzeuglenkung, mit einem Führungselement (3), mit einer Rastnase (5) und mit einem Federelement, wobei das Federelement gegen den Rotor (17) und das Sicherungselement (1) abstützbar ist, **dadurch gekennzeichnet, dass** an dem Sicherungselement (1) ein am Stator (25) verrastbares Verriegelungselement (7) lösbar befestigt ist, und dass das Verriegelungselement (7) in verrastetem Zustand formschlüssig mit dem Rotor (17) verbunden ist.

2. Sicherungselement nach Anspruch 1, **dadurch gekennzeichnet, dass** das Sicherungselement (1) und das Verriegelungselement (7) durch ein als Sollbruchstelle ausgebildetes Filmscharnier (9) verbunden sind.

3. Sicherungselement nach Anspruch 1 oder 2, **dadurch gekennzeichnet, dass** das Verriegelungselement (7) eine Öffnung (11) aufweist, und dass die Öffnung (11) in verrastetem Zustand einen Vorsprung oder einen Zentrierstift (21) des Rotors (17) aufnimmt.

4. Sicherungselement nach einem der vorhergehenden Ansprüche, **dadurch gekennzeichnet, dass** das Verriegelungselement (7) eine Rastnase (13) aufweist.

5. Sicherungselement nach einem der vorhergehenden Ansprüche, **dadurch gekennzeichnet, dass** das Führungselement als Führungsstift (3) ausgebildet ist, und dass das Federelement eine auf den Führungsstift (3) aufgeschobene Spiral feder ist.

6. Sicherungselement nach einem der vorhergehenden Ansprüche, **dadurch gekennzeichnet, dass** das Sicherungselement (1) aus Kunststoff besteht.

## Revendications

1. Élément de sécurité pour le blocage par engagement positif du mouvement de rotation d'un rotor (17) par rapport à un stator (25) d'une direction automobile, avec un élément de guidage (3), avec un taquet d'arrêt (5) et avec un élément de ressort, l'élément de ressort pouvant prendre appui contre le rotor (17) et l'élément de sécurité (1), **caractérisé en ce qu'**un élément de verrouillage (7) pouvant être enclenché sur le stator (25) est fixé de façon détachable sur l'élément de sécurité (1) et **en ce que** l'élément de verrouillage (7) dans la position enclenchée est relié par engagement positif avec le rotor (17).

2. Élément de sécurité selon la revendication 1, **caractérisé en ce que** l'élément de sécurité (1) et l'élément de verrouillage (7) sont reliés par une charnière à film (9) réalisée comme point de rupture théorique.

3. Élément de sécurité selon l'une quelconque des revendications 1 ou 2, **caractérisé en ce que** l'élément de verrouillage (7) présente une ouverture (11) et **en ce que** l'ouverture (11) dans la position enclenchée reçoit une saillie ou une broche de centrage (21) du rotor (17).

4. Élément de sécurité selon l'une quelconque des revendications précédentes, **caractérisé en ce que** l'élément de verrouillage (7) présente un taquet d'arrêt (13).

5. Élément de sécurité selon l'une quelconque des revendications précédentes, **caractérisé en ce que** l'élément de guidage est réalisé comme broche de guidage (3) et **en ce que** l'élément de ressort est un ressort spiral enfilé sur la broche de guidage (3).

6. Élément de sécurité selon l'une quelconque des revendications précédentes, **caractérisé en ce que** l'élément de sécurité (1) est réalisé en matière plastique.

## Claims

1. Securing element for form-fittingly blocking the rotation movement of a rotor (17) relative to a stator (25) of a motor vehicle steering apparatus, having a guide element (3) with a detent lug (5) and a spring element, whereby the spring element is able to be supported against the rotor (17) and the securing element (1), **characterised in that** a locking element (7) lockable on the stator (25) is releasably attached to the securing element (1), and that in the locked condition, the locking element (7) is connected in form-fitting manner to the rotor (17).

2. Securing element according to claim 1, **characterised in that** the securing element (1) and the locking element (7) are connected by a film hinge (9) designed as a predetermined breaking point.

3. Securing element according to claim 1 or 2, **characterised in that** the locking element (7) has an opening (11) and that in the locked condition, the opening (11) accommodates a projection or a centring pin (21) of the rotor (17).

4. Securing element according to one of the preceding claims, **characterised in that** the locking element (7) has a detent lug (13).

5. Securing element according to one of the preceding claims, **characterised in that** the guide element is designed as a guide pin (3) and that the spring element is a spiral spring pushed onto the guide pin (3).

6. Securing element according to one of the previous claims, **characterised in that** the securing element (1) is made of plastics.
